# EUROPEAN PATENT APPLICATION

(11) **EP 4 851 593 A1**
(43) Date of publication of application: **09.12.2026**
(21) Application number: 25761248.1
(22) Date of filing: 20.02.2025
(51) Int. Cl.: G01J 5/59, G01J 5/00, G01J 5/60

(54) **RADIATION TEMPERATURE MEASUREMENT DEVICE, RADIATION TEMPERATURE MEASUREMENT METHOD, AND RADIATION TEMPERATURE MEASUREMENT PROGRAM**

(30) Priority: 28.02.2024 JP 2024028170; 12.11.2024 JP 2024197176
(71) Applicant: HORIBA, Ltd., Kyoto-shi Kyoto 601-8510 (JP)
(72) Inventor: FUJINO, Sho, Kyoto-shi, Kyoto 601-8510 (JP); SAITO, Takashi, Kyoto-shi, Kyoto 601-8510 (JP); TOMINAGA, Koji, Kyoto-shi, Kyoto 601-8510 (JP); HIRAI, Asuka, Kyoto-shi, Kyoto 601-8510 (JP)
(74) Representative: Isarpatent
(86) International application number: PCT/JP2025/005873
(87) International publication number: WO 2025/182774

(57) **Abstract**

A radiation temperature measurement device 100 detects infrared radiation emitted from a measurement object W and measures a temperature of the measurement object W, and includes an infrared detection unit 2 that detects an amount of infrared radiation of each of a plurality of wavelength components and detects an amount of infrared radiation for each of a plurality of polarization components in at least one of the plurality of wavelength components, and a temperature calculation unit 3 that calculates the temperature of the measurement object W based on at least three types of infrared radiation amounts detected by the infrared detection unit 2.

## Description

### Technical Field

The present invention relates to a radiation temperature measurement device, a radiation temperature measurement method, and a program for radiation temperature measurement.

### Background Art

Conventionally, as shown in Patent Literature 1, a radiation thermometer of a wavelength difference method has been considered. The radiation thermometer measures a temperature of a wafer by using two wavelengths having different emissivities. In addition, by disposing the radiation thermometer above the wafer at a position facing a surface of the wafer, temperature calculation is performed by regarding a reflection component from the wafer as being known as infrared radiation from the radiation thermometer.

However, in a dry etching apparatus or the like, an electrode or the like is present above a wafer, and therefore a radiation thermometer may not be disposed above the wafer. In this case, for example, the radiation thermometer needs to be disposed on a side wall of a chamber to measure the wafer obliquely.

Here, in the case of measurement from an oblique direction, the wafer and the radiation thermometer do not face each other, and therefore infrared radiation that is reflected by and incident from the wafer surface is not infrared radiation from the radiation thermometer but is from a source other than the radiation thermometer (for example, a member at a reflection destination such as an inner wall of the chamber), performing temperature calculation by regarding the infrared radiation as being known is impossible.

In the case of the conventional wavelength difference method, the following two relational expressions are obtained from two wavelengths at which the emissivity of the wafer is different, but the relational expressions cannot be solved because three unknowns are present, namely, a wafer temperature Tx, a temperature of a member at a reflection destination (reflection destination temperature) Tr, and a temperature of a member on a back surface of the wafer (wafer back-surface temperature) Tb. ${E}_{1} = {ε}_{1} \cdot {F}_{1} \left(Tx\right) + {r}_{1} \cdot {F}_{1} \left(Tr\right) + {t}_{1} \cdot {F}_{1} \left(Tb\right)$ ${E}_{2} = {ε}_{2} \cdot {F}_{2} \left(Tx\right) + {r}_{2} \cdot {F}_{2} \left(Tr\right) + {t}_{2} \cdot {F}_{2} \left(Tb\right)$

Here, ε₁ is the emissivity of the wafer at a first wavelength, r₁ is the reflectance of the wafer at the first wavelength, and t₁ is the transmittance of the wafer at the first wavelength. In addition, ε₂ is the emissivity of the wafer at a second wavelength, r₂ is the reflectance of the wafer at the second wavelength, and t₂ is the transmittance of the wafer at the second wavelength.

### Citation List

### Patent Literature

Patent Literature 1: International Publication No. WO 2021/080002

### Summary of Invention

### Technical Problem

Accordingly, the present invention has been made in view of the above-described problems, and a main object of the present invention is, in a radiation temperature measurement device of a wavelength difference method, to accurately determine a temperature of a measurement object regardless of an infrared radiation component from surroundings that is reflected by the measurement object.

### Solution to Problem

That is, a radiation temperature measurement device according to the present invention is a radiation temperature measurement device that detects infrared radiation emitted from a measurement object and measures a temperature of the measurement object, the radiation temperature measurement device including: an infrared detection unit that detects an amount of infrared radiation of each of a plurality of wavelength components and detects an amount of infrared radiation for each of a plurality of polarization components in at least one of the plurality of wavelength components; and a temperature calculation unit that calculates the temperature of the measurement object based on at least three types of infrared radiation amounts detected by the infrared detection unit.

With such a radiation temperature measurement device, the amount of infrared radiation of each of the plurality of wavelength components is detected, the amount of infrared radiation for each of the plurality of polarization components is detected in at least one of the plurality of wavelength components, and the temperature of the measurement object is calculated based on the detected at least three types of infrared radiation amounts. Therefore, the temperature of the measurement object can be accurately determined regardless of an infrared radiation component from surroundings that is reflected by the measurement object.

The infrared detection unit desirably has a first infrared sensor that detects an amount of infrared radiation at a first wavelength, and a second infrared sensor that detects an amount of infrared radiation at a second wavelength at which an emissivity of the measurement object is different from an emissivity at the first wavelength.

The infrared detection unit desirably further includes a polarizer provided in front of the first infrared sensor and the second infrared sensor, the first infrared sensor desirably detects an amount of infrared radiation for each of two mutually different polarization components at the first wavelength, and the second infrared sensor desirably detects an amount of infrared radiation for each of two mutually different polarization components at the second wavelength.

The first infrared sensor desirably detects an amount of infrared radiation of p-polarized light at the first wavelength and an amount of infrared radiation of s-polarized light at the first wavelength, and the second infrared sensor desirably detects an amount of infrared radiation of p-polarized light at the second wavelength and an amount of infrared radiation of s-polarized light at the second wavelength.

In order to simultaneously measure the amount of infrared radiation of p-polarized light and the amount of infrared radiation of s-polarized light to improve responsiveness and to reduce a decrease in the amount of infrared radiation as much as possible, the infrared detection unit desirably further includes a polarizer disposed at 20 to 65 degrees with respect to incident infrared radiation and configured to transmit infrared radiation of one of p-polarized light and s-polarized light and reflect infrared radiation of the other of p-polarized light and s-polarized light. In this configuration, the first infrared sensor has a first transmission infrared sensor that detects an amount of infrared radiation at the first wavelength of the one of p-polarized light and s-polarized light transmitted through the polarizer, and a first reflection infrared sensor that detects an amount of infrared radiation at the first wavelength of the other of p-polarized light and s-polarized light reflected by the polarizer. In addition, the second infrared sensor has a second transmission infrared sensor that detects an amount of infrared radiation at the second wavelength of the one of p-polarized light and s-polarized light transmitted through the polarizer, and a second reflection infrared sensor that detects an amount of infrared radiation at the second wavelength of the other of p-polarized light and s-polarized light reflected by the polarizer.

In order to suitably use the radiation temperature measurement device in a case where the radiation temperature measurement device cannot be disposed at a position facing a surface of a measurement object, the infrared detection unit desirably detects the amount of infrared radiation at a position inclined with respect to the surface of the measurement object.

As a specific arrangement mode of the infrared detection unit, the infrared detection unit may detect the amount of infrared radiation at a position inclined such that an angle formed with the surface of the measurement object is a Brewster angle.

The temperature calculation unit can solve by a conventional bisection method by consolidating relational expressions of the detected at least three types of infrared radiation amounts and eliminating any one of three temperatures that are unknowns (the temperature of the measurement object, a temperature of a member on a back surface of the measurement object, and a temperature of a reflection-destination member that emits infrared radiation reflected by the measurement object). However, an actual detection signal includes noise or the like of the infrared sensor, and consolidating the relational expressions reduces the number of unknowns but makes the calculation susceptible to the influence of noise. Therefore, the temperature calculation unit desirably calculates the temperature of the measurement object from at least three types of infrared radiation amounts detected by the infrared detection unit, by using an optimization calculation method.

With this configuration, the influence of noise or the like of the infrared sensor can be reduced, and the temperature of the measurement object can be accurately determined.

In addition, the temperature calculation unit desirably calculates, in addition to the temperature of the measurement object, a temperature of a member on the back surface of the measurement object and/or a temperature of a reflection-destination member that emits infrared radiation reflected by the measurement object.

Specifically, the temperature calculation unit desirably calculates the temperature of the measurement object from at least three types of infrared radiation amounts detected by the infrared detection unit, by using a Kalman filter as the optimization calculation method.

In addition, a radiation temperature measurement method according to the present invention is a radiation temperature measurement method for detecting infrared radiation emitted from a measurement object and measuring a temperature of the measurement object, the radiation temperature measurement method including detecting an amount of infrared radiation of each of a plurality of wavelength components, detecting an amount of infrared radiation for each of a plurality of polarization components in at least one of the plurality of wavelength components, and calculating the temperature of the measurement object based on the detected at least three types of infrared radiation amounts.

Furthermore, a program for radiation temperature measurement according to the present invention is a program for radiation temperature measurement used in a radiation temperature measurement device including an infrared detection unit that detects an amount of infrared radiation of each of a plurality of wavelength components in infrared radiation emitted from a measurement object and detects an amount of infrared radiation for each of a plurality of polarization components in at least one of the plurality of wavelength components, the program causing a computer to have a function as a temperature calculation unit that calculates the temperature of the measurement object based on at least three types of infrared radiation amounts detected by the infrared detection unit.

The program for radiation temperature measurement may be electronically distributed or may be recorded on a program recording medium such as a CD, a DVD, or a flash memory.

### Advantageous Effects of Invention

According to the present invention described above, in the radiation temperature measurement device of the wavelength difference method, the temperature of a measurement object can be accurately determined regardless of an infrared radiation component from surroundings that is reflected by the measurement object.

### Brief Description of Drawings

FIG. 1 is a diagram illustrating a state in which a radiation temperature measurement device is disposed in a semiconductor manufacturing apparatus according to an embodiment of the present invention.
FIG. 2 is a graph illustrating transmittance, reflectance, and emissivity in s-polarized light and p-polarized light of a silicon wafer (left: first wavelength (9.3-14 µm), right: second wavelength (7-7.8 µm)).
FIG. 3 is a diagram schematically illustrating a configuration of the radiation temperature measurement device according to the same embodiment (a configuration in which each infrared detection unit has two infrared detectors).
FIG. 4 is a graph illustrating, in the temperature calculation unit according to the same embodiment, an indication error in a case where the optimization calculation method is used and an indication error in a case where calculation is performed by eliminating an unknown.
FIG. 5 is a diagram schematically illustrating a configuration of a radiation temperature measurement device according to a modified embodiment (a configuration in which each infrared detection unit has one infrared detector).
FIG. 6 is a diagram schematically illustrating a configuration of a radiation temperature measurement device according to a modified embodiment.
FIG. 7 is a diagram schematically illustrating a configuration of a radiation temperature measurement device according to a modified embodiment.
FIG. 8 is a diagram schematically illustrating a configuration of a radiation temperature measurement device according to a modified embodiment.

### Description of Embodiments

### <An Embodiment of the Present Invention>

An embodiment of a radiation temperature measurement device according to the present invention will be described below with reference to the drawings. In any of the drawings described below, components are appropriately omitted or exaggerated and schematically illustrated for ease of understanding. The same components are denoted by the same reference signs, and description of the same components will be omitted as appropriate.

### <Configuration of Radiation Temperature Measurement Device 100>

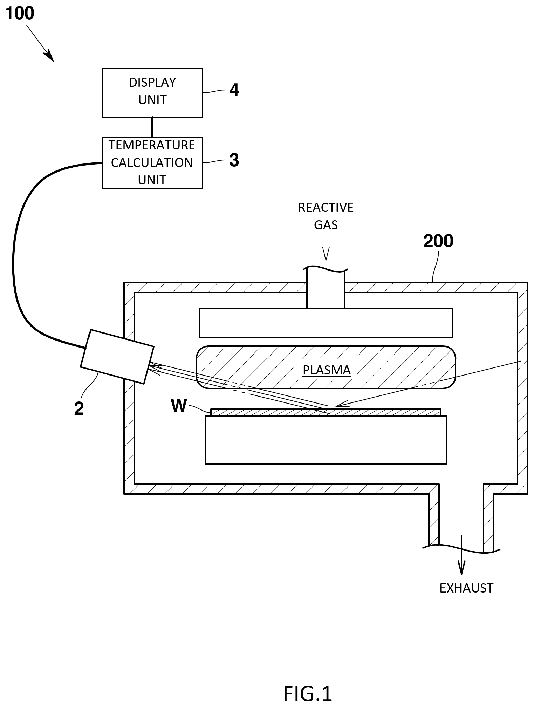

As illustrated in FIG. 1, a radiation temperature measurement device 100 according to the present embodiment is disposed in a processing chamber 200 in a semiconductor manufacturing apparatus such as, for example, a plasma etching apparatus, and measures a temperature of a measurement object W such as a wafer processed in the processing chamber 200. The radiation temperature measurement device 100 is disposed on a side wall of the processing chamber 200 and measures the temperature of the measurement object W obliquely from above.

Specifically, as illustrated in FIG. 1, the radiation temperature measurement device 100 includes an infrared detection unit 2 that detects infrared radiation emitted from the measurement object W, and a temperature calculation unit 3 that calculates the temperature of the measurement object W based on an amount of infrared radiation detected by the infrared detection unit 2. The measurement object W according to the present embodiment has a property of emitting infrared radiation, a property of reflecting infrared radiation, and a property of transmitting infrared radiation, and is, for example, a silicon wafer.

### <Infrared Detection Unit 2>

The infrared detection unit 2 detects an amount of infrared radiation of each of a plurality of wavelength components and detects an amount of infrared radiation for each of a plurality of polarization components in at least one of the plurality of wavelength components. The infrared detection unit 2 according to the present embodiment detects an amount of infrared radiation for each of two polarization components (here, s-polarized light and p-polarized light) at a first wavelength λ₁, and detects an amount of infrared radiation for each of two polarization components (here, s-polarized light and p-polarized light) at a second wavelength λ₂ different from the first wavelength λ₁.

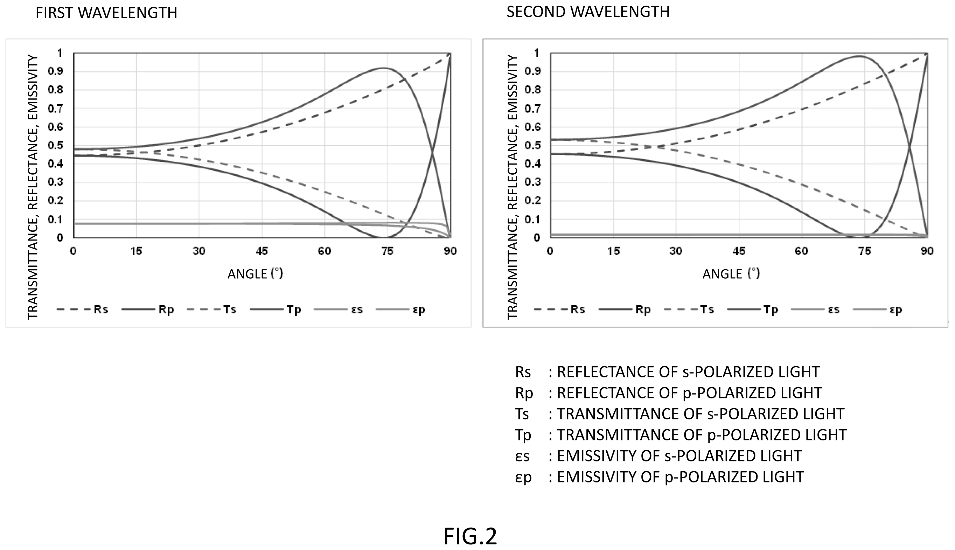

In addition, as illustrated in FIG. 1, the infrared detection unit 2 detects the amount of infrared radiation at a position inclined with respect to a surface of the measurement object W. Here, as illustrated in FIG. 2, the angle dependence of an emissivity ε, a reflectance r, and a transmittance t of s-polarized light and p-polarized light of the measurement object W (here, a silicon wafer) greatly changes as the angle becomes oblique, and at a Brewster angle (74 degrees), a difference between a reflectance rₛ of s-polarized light and a reflectance rₚ of p-polarized light is maximum. Since the measurement method according to the present embodiment uses a difference between s-polarized light and p-polarized light in reflectance and transmittance (ΔR=Rs-Rp, ΔT=Ts-Tp), the infrared detection unit 2 desirably detects the amount of infrared radiation at a position inclined at an angle at which differences between s-polarized light and p-polarized light (ΔR, ΔT) occur. Furthermore, because ΔR and ΔT are maximum at the Brewster angle, the infrared detection unit 2 desirably detects the amount of infrared radiation at a position inclined such that an angle formed with the surface of the measurement object W is the Brewster angle.

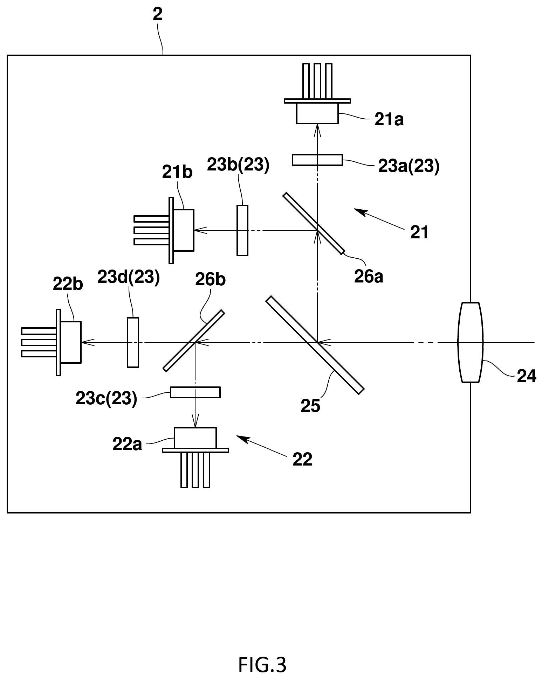

Specifically, as illustrated in FIG. 3, the infrared detection unit 2 includes a first infrared sensor 21 that detects an amount of infrared radiation at the first wavelength λ₁, a second infrared sensor 22 that detects an amount of infrared radiation at the second wavelength λ₂, and a polarizer 23 provided in front of the first infrared sensor 21 and the second infrared sensor 22. In addition, the infrared detection unit 2 includes a condenser lens 24 that condenses infrared radiation, and a beam splitter 25 such as a dichroic mirror that transmits one of the first wavelength λ₁ and the second wavelength λ₂ (here, the second wavelength λ₂) and reflects the other (here, the first wavelength λ₁). Each of the infrared sensors 21 and 22 has a sensor element such as a thermopile that detects infrared radiation.

The first infrared sensor 21 detects an amount of infrared radiation of p-polarized light at the first wavelength and an amount of infrared radiation of s-polarized light at the first wavelength. In addition, the second infrared sensor 22 detects an amount of infrared radiation of p-polarized light at the second wavelength and an amount of infrared radiation of s-polarized light at the second wavelength.

Here, two first infrared sensors 21 are provided, a polarizer 23a that extracts s-polarized light is provided in front of one first infrared sensor 21a, and a polarizer 23b that extracts p-polarized light is provided in front of the other first infrared sensor 21b. Infrared radiation is split by a half mirror 26a and enters the two infrared sensors 21a and 21b. In addition, two second infrared sensors 22 are also provided, a polarizer 23c that extracts s-polarized light is provided in front of one second infrared sensor 22a, and a polarizer 23d that extracts p-polarized light is provided in front of the other second infrared sensor 22b. Infrared radiation is split by a half mirror 26b and enters the two infrared sensors 22a and 22b.

### <Temperature Calculation Unit 3>

The temperature calculation unit 3 calculates a temperature of the measurement object W based on at least three types of infrared radiation amounts detected by the infrared detection unit 2 (values of detection signals of the sensors 21 and 22). In the present embodiment, the temperature of the measurement object W is calculated based on an amount of infrared radiation E_{1,s} of s-polarized light at the first wavelength λ₁, an amount of infrared radiation E_{1,p} of p-polarized light at the first wavelength λ₁, an amount of infrared radiation E_{2,s} of s-polarized light at the second wavelength λ₂, and an amount of infrared radiation E_{2,p} of p-polarized light at the second wavelength λ₂.

Specifically, the temperature calculation unit 3 calculates three unknowns (a temperature Tx of the measurement object, a temperature (reflection component temperature) Tr of a reflection-destination member (for example, a side wall of a chamber) that emits infrared radiation reflected by the measurement object W, and a temperature (transmission component temperature) Tb of a member on a back surface of the measurement object W) from the following four relational expressions. In other words, the temperature calculation unit 3 calculates the temperature of the measurement object W by using relational expressions including parameters using three unknowns (the temperature Tx of the measurement object, the temperature (reflection component temperature) Tr of the reflection-destination member (for example, the side wall of the chamber) that emits infrared radiation reflected by the measurement object W, and the temperature (transmission component temperature) Tb of the member on the back surface of the measurement object W).${E}_{1 , s} = {ε}_{1 , s} \cdot {F}_{1} \left(Tx\right) + {r}_{1 , s} \cdot {F}_{1} \left(Tr\right) + {t}_{1 , s} \cdot {F}_{1} \left(Tb\right)$ ${E}_{1 , p} = {ε}_{1 , p} \cdot {F}_{1} \left(Tx\right) + {r}_{1 , p} \cdot {F}_{1} \left(Tr\right) + {t}_{1 , p} \cdot {F}_{1} \left(Tb\right)$ ${E}_{2 , s} = {ε}_{2 , s} \cdot {F}_{2} \left(Tx\right) + {r}_{2 , s} \cdot {F}_{2} \left(Tr\right) + {t}_{2 , s} \cdot {F}_{2} \left(Tb\right)$ ${E}_{2 , p} = {ε}_{2 , p} \cdot {F}_{2} \left(Tx\right) + {r}_{2 , p} \cdot {F}_{2} \left(Tr\right) + {t}_{2 , p} \cdot {F}_{2} \left(Tb\right)$

Here, ε_{1,s} is an emissivity of the measurement object W in s-polarized light at the first wavelength λ₁, ε_{1,p} is an emissivity of the measurement object W in p-polarized light at the first wavelength λ₁, r_{1,s} is a reflectance of the measurement object W in s-polarized light at the first wavelength λ₁, r_{1,p} is a reflectance of the measurement object W in p-polarized light at the first wavelength λ₁, t_{1,s} is a transmittance of the measurement object W in s-polarized light at the first wavelength λ₁, and t_{1,p} is a transmittance of the measurement object W in p-polarized light at the first wavelength λ₁.

In addition, ε_{2,s} is an emissivity of the measurement object W in s-polarized light at the second wavelength λ₂, ε_{2,p} is an emissivity of the measurement object W in p-polarized light at the second wavelength λ₂, r_{2,s} is a reflectance of the measurement object W in s-polarized light at the second wavelength λ₂, r_{2,p} is a reflectance of the measurement object W in p-polarized light at the second wavelength λ₂, t_{2,s} is a transmittance of the measurement object W in s-polarized light at the second wavelength λ₂, and t_{2,p} is a transmittance of the measurement object W in p-polarized light at the second wavelength λ₂.

The temperature calculation unit 3 calculates the three unknowns (the temperature Tx of the measurement object, the reflection component temperature Tr, and the transmission component temperature Tb) from the above four relational expressions by using an optimization calculation method. Specifically, the temperature calculation unit 3 calculates the temperature of the measurement object W by using, as the optimization calculation method, a Kalman filter such as, for example, an unscented Kalman filter or an extended Kalman filter. In addition to the Kalman filter, the temperature calculation unit 3 may use, for example, a particle filter, a Gaussian filter, or the like. The temperature calculated by the temperature calculation unit 3 is displayed on a display unit 4 such as a display.

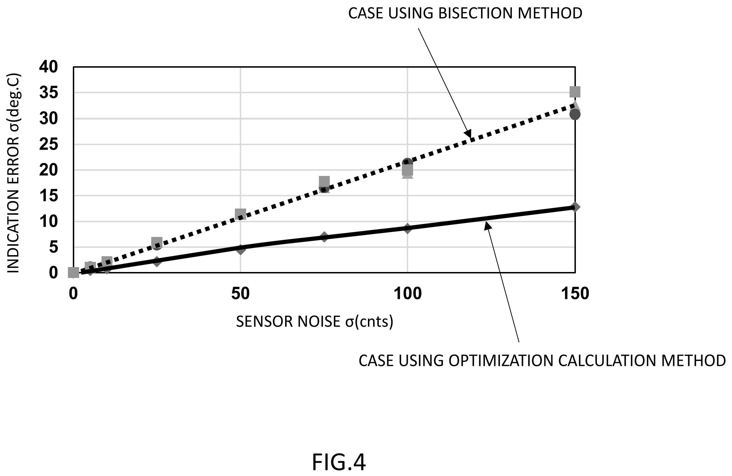

Next, FIG. 4 is a graph showing, in the temperature calculation unit 3, an indication error when the optimization calculation method is used, and an indication error when calculation is performed with one unknown by eliminating an unknown (when a bisection method is used). As can be seen from this graph, even assuming that sensor noise σ has become large, the indication error when the optimization calculation method is used is less susceptible to the influence of the sensor noise σ than the indication error when the bisection method is used, and the temperature can be calculated with high accuracy.

### <Effects of Present Embodiment>

According to the radiation temperature measurement device 100 of the present embodiment configured as described above, the amount of infrared radiation for each of a plurality of polarization components is detected for each of a plurality of wavelength components, and the temperature of the measurement object W is calculated based on the detected at least three types of infrared radiation amounts. Therefore, the temperature of the measurement object W can be accurately determined regardless of an infrared radiation component from surroundings that is reflected by the measurement object W.

Particularly in the present embodiment, since the temperature calculation unit 3 uses the optimization calculation method using a Kalman filter, the temperature of the measurement object W can be determined while reducing the influence of noise of the infrared sensors 21 and 22. Here, the bisection method that solves one unknown can also solve two unknowns by being changed to a quadrisection method, and can solve three unknowns by being changed to an octasection method. However, since the amount of calculation increases exponentially, calculation time is required. On the other hand, a Kalman filter such as an unscented Kalman filter can perform calculation at high speed even with three unknowns.

### <Other Embodiments>

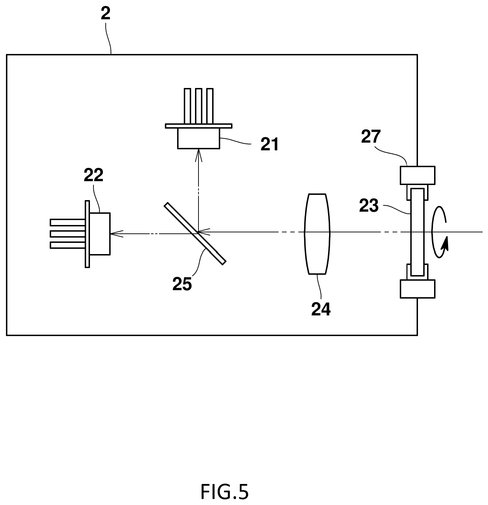

For example, in the above embodiment, four types of infrared radiation amounts are simultaneously detected using four infrared sensors 21 and 22 (two first infrared sensors 21a and 21b and two second infrared sensors 22a and 22b); however, as illustrated in FIG. 5, four types of infrared radiation amounts may be intermittently detected using two infrared sensors 21 and 22 (one first infrared sensor 21 and one second infrared sensor 22).

In this case, the polarizer 23 may be common to the two infrared sensors 21 and 22, and may be provided in front of the condenser lens 24 or between the condenser lens 24 and the beam splitter 25. By rotating the polarizer 23 by a rotation mechanism 26, switching may be performed between a state in which s-polarized light is extracted and a state in which p-polarized light is extracted. In addition, when the polarizer 23 is continuously rotated by the rotation mechanism 26, the amount of infrared radiation of s-polarized light and the amount of infrared radiation of p-polarized light may be detected from output signals from the infrared sensors 21 and 22 by using a lock-in detection unit (not illustrated).

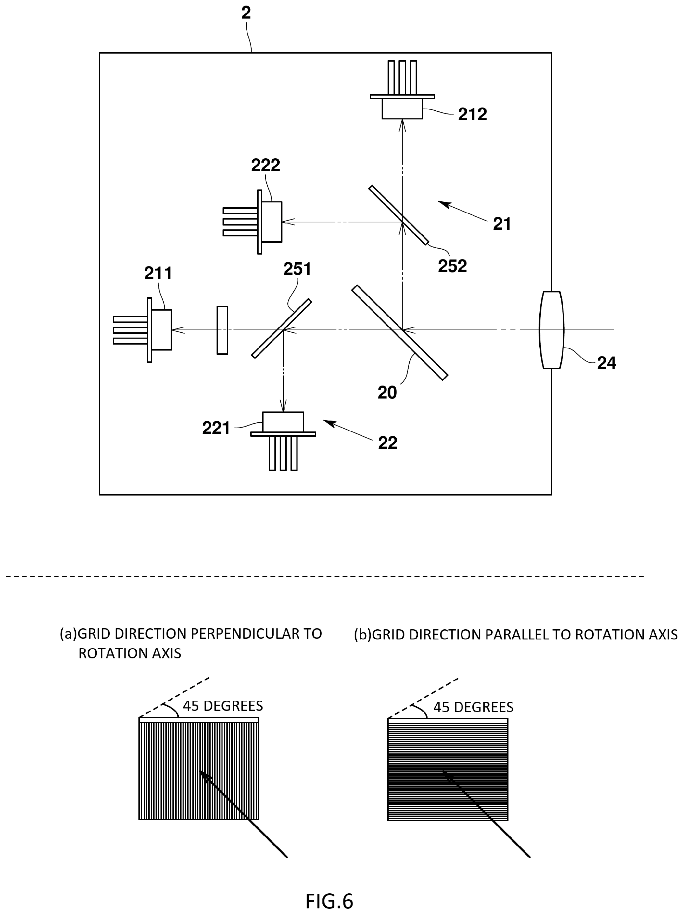

The optical configuration of the above embodiment enables simultaneous measurement of the amount of infrared radiation of p-polarized light and the amount of infrared radiation of s-polarized light and has good responsiveness, but the amount of infrared radiation is decreased by the beam splitter 25. In addition, the optical configuration illustrated in FIG. 5 can suppress a decrease in the amount of infrared radiation, but the polarizer 23 needs to be rotated, and the sampling rate becomes doubled. As a configuration that solves these problems at once, the configuration illustrated in FIG. 6 may be considered.

The infrared detection unit 2 illustrated in FIG. 6 includes a polarizer 20 that is disposed at 20 to 65 degrees with respect to incident infrared radiation, transmits infrared radiation of one of p-polarized light and s-polarized light (here, s-polarized light), and reflects infrared radiation of the other of p-polarized light and s-polarized light (here, p-polarized light). The arrangement angle of the polarizer 20 is 20 to 65 degrees, more preferably 40 to 50 degrees, more preferably 45 degrees with respect to the incident infrared radiation, but any design capable of separating reflected light and transmitted light of s-polarized light and p-polarized light may be employed. In addition, the polarizer 20 may be a wire-grid polarizer or may be a polarizer other than a wire-grid polarizer. At this time, a direction in which a grid of the polarizer 20 extends (grid direction) is orthogonal to a rotation axis of the polarizer 20. When the grid direction of the polarizer 20 is parallel to the rotation axis of the polarizer 20, a configuration is obtained in which p-polarized light is transmitted and s-polarized light is reflected. In addition, an extinction ratio of the polarizer 20 is 1:4 to 1:100.

The first infrared sensor 21 has a first transmission infrared sensor 211 that detects an amount of infrared radiation at the first wavelength λ₁ of one of p-polarized light and s-polarized light transmitted through the polarizer 20, and a first reflection infrared sensor 212 that detects an amount of infrared radiation at the first wavelength λ₁ of the other of p-polarized light and s-polarized light reflected by the polarizer 20.

In addition, the second infrared sensor 22 has a second transmission infrared sensor 221 that detects an amount of infrared radiation at the second wavelength λ₂ of the one of p-polarized light and s-polarized light transmitted through the polarizer 20, and a second reflection infrared sensor 222 that detects an amount of infrared radiation at the second wavelength λ₂ of the other of p-polarized light and s-polarized light reflected by the polarizer 20.

Here, in front of the first transmission infrared sensor 211 and the second transmission infrared sensor 221, a beam splitter 251 such as a dichroic mirror is provided that transmits one of the first wavelength λ₁ and the second wavelength λ₂ in the transmitted s-polarized light (here, the first wavelength λ₁) and reflects the other (here, the second wavelength λ₂). In addition, in front of the first reflection infrared sensor 212 and the second reflection infrared sensor 222, a beam splitter 252 such as a dichroic mirror is provided that transmits one of the first wavelength λ₁ and the second wavelength λ₂ in the reflected p-polarized light (here, the first wavelength λ₁) and reflects the other (here, the second wavelength λ₂).

With the configuration of FIG. 6, by using the polarizer 20 as a beam splitter, a half mirror becomes unnecessary, and the amount of infrared radiation of s-polarized light and the amount of infrared radiation of p-polarized light can be simultaneously measured without reducing the amount of infrared radiation. In addition, by separating the infrared radiation into s-polarized light and p-polarized light at the first plate in the infrared detection unit 2, dichroic mirrors 251 and 252 dedicated to the respective polarized lights can be designed, a shift in a cut-on wavelength due to a difference between s-polarized light and p-polarized light can be eliminated, and transmittance can also be increased.

Furthermore, the temperature calculation unit 3 of the above embodiment calculates the temperature of the measurement object W by using four relational expressions, but may calculate the temperature of the measurement object W by using three or five or more relational expressions. Here, the five or more relational expressions may include, in addition to the above embodiment, an amount of infrared radiation of s-polarized light or p-polarized light at a third wavelength, or may include an amount of infrared radiation at a polarization angle different from s-polarized light or p-polarized light at the first or second wavelength.

In the above embodiment, a temperature of a measurement object is calculated based on the amount of infrared radiation of s-polarized light and the amount of infrared radiation of p-polarized light at the first wavelength and the amount of infrared radiation of s-polarized light and the amount of infrared radiation of p-polarized light at the second wavelength (by using four relational expressions); however, the temperature of the measurement object may be calculated based on the amount of infrared radiation of s-polarized light and the amount of infrared radiation of p-polarized light at one of the first wavelength and the second wavelength, and an amount of infrared radiation before polarization at the other of the first wavelength and the second wavelength (an amount of infrared radiation in which s-polarized light and p-polarized light are mixed) (by using three relational expressions).

Moreover, the temperature calculation unit 3 of the above embodiment calculates the temperature by using the optimization calculation method, but may have a configuration in which the temperature is calculated by eliminating an unknown from three or more relational expressions.

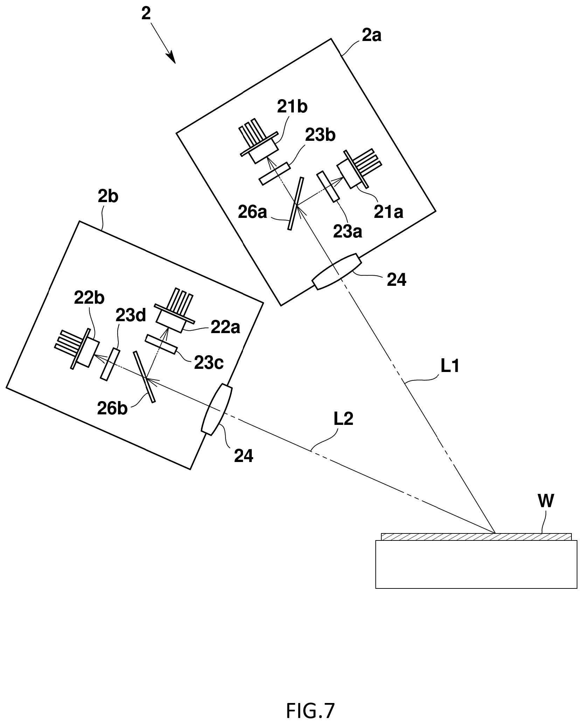

The radiation temperature measurement device 100 of the above embodiment has a configuration in which a wavelength difference method and a polarization difference method are combined; however, as illustrated in FIG. 7, a configuration in which an angle difference method and a polarization difference method are combined may be employed. Specifically, the radiation temperature measurement device 100 includes the infrared detection unit 2 that detects an amount of infrared radiation for each of one or a plurality of polarization components for each of a plurality of measurement optical axes L1 and L2, and the temperature calculation unit 3 that calculates a temperature of a measurement object based on at least three types of infrared radiation amounts detected by the infrared detection unit 2.

Specifically, the infrared detection unit 2 includes a first infrared detection unit 2a that detects an amount of infrared radiation on the measurement optical axis L1, and a second infrared detection unit 2b that detects an amount of infrared radiation on the measurement optical axis L2.

The first infrared detection unit 2a detects an amount of infrared radiation of p-polarized light and an amount of infrared radiation of s-polarized light on the measurement optical axis L1. In addition, the second infrared detection unit 2b detects an amount of infrared radiation of p-polarized light and an amount of infrared radiation of s-polarized light on the measurement optical axis L2.

Specifically, the first infrared detection unit 2a has two first infrared sensors 21, the polarizer 23a that extracts s-polarized light is provided in front of one first infrared sensor 21a, and the polarizer 23b that extracts p-polarized light is provided in front of the other first infrared sensor 21b. In addition, the first infrared detection unit 2a includes the condenser lens 24 that condenses infrared radiation, and a beam splitter 26a such as a dichroic mirror that splits infrared radiation and reflects the other.

In addition, the second infrared detection unit 2b has two second infrared sensors 22, the polarizer 23c that extracts s-polarized light is provided in front of one second infrared sensor 22a, and the polarizer 23d that extracts p-polarized light is provided in front of the other second infrared sensor 22b. In addition, the second infrared detection unit 2b includes the condenser lens 24 that condenses infrared radiation, and a beam splitter 26b such as a dichroic mirror that splits infrared radiation and reflects the other.

The temperature calculation unit 3 calculates the temperature of the measurement object W based on at least three types of infrared radiation amounts detected by the infrared detection unit 2. In the present embodiment, the temperature of the measurement object W is calculated based on an amount of infrared radiation E_{L1,s} of s-polarized light on the measurement optical axis L1, an amount of infrared radiation E_{L1,p} of p-polarized light on the measurement optical axis L1, an amount of infrared radiation E_{L2,s} of s-polarized light on the measurement optical axis L2, and an amount of infrared radiation E_{L2,p} of p-polarized light on the measurement optical axis L2. The calculation method is the same as in the above embodiment.

In FIG. 7, the first infrared detection unit 2a has two infrared sensors 21a and 21b, and the polarizers 23a and 23b are provided in front of the infrared sensors 21a and 21b; however, one infrared sensor 21 may be used. In this case, one polarizer 23 may be provided in front of the infrared sensor 21, and the polarizer 23 may be rotated by the rotation mechanism 26 to switch between a state in which s-polarized light is extracted and a state in which p-polarized light is extracted. In addition, when the polarizer 23 is continuously rotated by the rotation mechanism 26, the amount of infrared radiation of s-polarized light and the amount of infrared radiation of p-polarized light on the measurement optical axis L1 may be detected from an output signal from the infrared sensor 21 by using a lock-in detection unit (not illustrated).

Similarly, in FIG. 7, the second infrared detection unit 2b has two infrared sensors 22a and 22b, and the polarizers 23c and 23d are provided in front of the infrared sensors 22a and 22b; however, one infrared sensor 22 may be used. In this case, one polarizer 23 may be provided in front of the infrared sensor 22, and the polarizer 23 may be rotated by the rotation mechanism 26 to switch between a state in which s-polarized light is extracted and a state in which p-polarized light is extracted. In addition, when the polarizer 23 is continuously rotated by the rotation mechanism 26, the amount of infrared radiation of s-polarized light and the amount of infrared radiation of p-polarized light on the measurement optical axis L2 may be detected from an output signal from the infrared sensor 22 by using a lock-in detection unit (not illustrated).

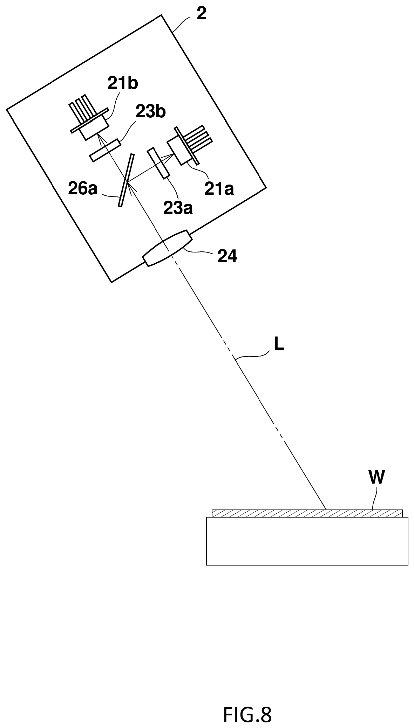

Another radiation temperature measurement device is a radiation temperature measurement device 100 that detects infrared radiation emitted from a measurement object such as metal and measures a temperature of the measurement object, and may have a configuration including, as illustrated in FIG. 8, an infrared detection unit 2 that detects an amount of infrared radiation for each of a plurality of polarization components (for example, s-polarized light and p-polarized light), and a temperature calculation unit 3 that calculates the temperature of the measurement object based on at least two types of infrared radiation amounts (for example, an amount of infrared radiation of s-polarized light and an amount of infrared radiation of p-polarized light) detected by the infrared detection unit 2.

In this case, the infrared detection unit 2 detects the amount of infrared radiation of p-polarized light and the amount of infrared radiation of s-polarized light on the measurement optical axis L. Specifically, the infrared detection unit 2 has two infrared sensors 21, a polarizer 23a that extracts s-polarized light is provided in front of one infrared sensor 21a, and a polarizer 23b that extracts p-polarized light is provided in front of the other infrared sensor 21b. In addition, the infrared detection unit 2 includes a condenser lens 24 that condenses infrared radiation, and a beam splitter 25 such as a dichroic mirror that splits infrared radiation and reflects the other.

The temperature calculation unit 3 calculates the temperature of the measurement object W based on at least two types of infrared radiation amounts detected by the infrared detection unit 2. In the present embodiment, the temperature of the measurement object W is calculated based on the amount of infrared radiation E_{L,s} of s-polarized light on the measurement optical axis L and the amount of infrared radiation E_{L,p} of p-polarized light on the measurement optical axis L. The calculation method is the same as in the above embodiment.

In addition, in the above embodiment, each of the infrared sensors 21 and 22 has been exemplified as having a thermopile element, but each of the infrared sensors 21 and 22 is not limited to such a sensor. As a sensor element used as each of the infrared sensors 21 and 22, a sensor element suitable for a measurement temperature range may be used.

For example, when the radiation temperature measurement device 100 is used in a dry etching apparatus or the like, an upper limit of a measurement temperature range is about 200°C, and as can also be seen from Planck's law, a long-wavelength infrared region is generally used to ensure sensitivity in such a low temperature region. In such a case, as each of the infrared sensors 21 and 22, a thermopile sensor or a quantum sensor such as an InAsSb sensor is preferably used.

In addition, when the radiation temperature measurement device 100 is used in a film forming apparatus such as a CVD apparatus or an ashing apparatus, an upper limit of the measurement temperature range is about 700°C, and therefore a visible light region, a near-infrared region, and a mid-infrared region can be used in addition to the long-wavelength infrared region. Therefore, in such a case, as each of the infrared sensors 21 and 22, not only a thermopile sensor or a quantum sensor such as an InAsSb sensor, but also an InGaAs sensor or the like can be used.

In addition, sensor elements of the same type may be used as the infrared sensors 21 and 22, or sensor elements of mutually different types may be used.

In addition, various modifications and combinations of embodiments may be made without departing from the spirit of the present invention.

### Industrial Applicability

According to the present invention, in a radiation temperature measurement device of a wavelength difference method, a temperature of a measurement object can be accurately determined regardless of an infrared radiation component from surroundings that is reflected by the measurement object.

### Reference Signs List

- 100: radiation temperature measurement device
- W: measurement object
- 2: infrared detection unit
- 21(21a, 21b): first infrared sensor
- 22(22a, 22b): second infrared sensor
- 23(23a to 23d): polarizer
- 3: temperature calculation unit

## Claims

1. A radiation temperature measurement device that detects infrared radiation emitted from a measurement object and measures a temperature of the measurement object, the radiation temperature measurement device comprising:
an infrared detection unit that detects an amount of infrared radiation of each of a plurality of wavelength components and detects an amount of infrared radiation for each of a plurality of polarization components in at least one of the plurality of wavelength components; and
a temperature calculation unit that calculates the temperature of the measurement object based on at least three types of infrared radiation amounts detected by the infrared detection unit.

2. The radiation temperature measurement device according to claim 1, wherein the infrared detection unit comprises:
a first infrared sensor that detects an amount of infrared radiation at a first wavelength, and
a second infrared sensor that detects an amount of infrared radiation at a second wavelength different from the first wavelength.

3. The radiation temperature measurement device according to claim 2, wherein
the infrared detection unit further comprises a polarizer provided in front of the first infrared sensor and the second infrared sensor,
the first infrared sensor detects an amount of infrared radiation for each of two mutually different polarization components at the first wavelength, and
the second infrared sensor detects an amount of infrared radiation for each of two mutually different polarization components at the second wavelength.

4. The radiation temperature measurement device according to claim 3, wherein
the first infrared sensor detects an amount of infrared radiation of p-polarized light at the first wavelength and an amount of infrared radiation of s-polarized light at the first wavelength, and
the second infrared sensor detects an amount of infrared radiation of p-polarized light at the second wavelength and an amount of infrared radiation of s-polarized light at the second wavelength.

5. The radiation temperature measurement device according to claim 2, wherein
the infrared detection unit further comprises a polarizer disposed at 20 to 65 degrees with respect to incident infrared radiation and configured to transmit infrared radiation of one of p-polarized light and s-polarized light and reflect infrared radiation of the other of p-polarized light and s-polarized light,
the first infrared sensor includes:
a first transmission infrared sensor that detects an amount of infrared radiation at the first wavelength of the one of p-polarized light and s-polarized light transmitted through the polarizer, and
a first reflection infrared sensor that detects an amount of infrared radiation at the first wavelength of the other of p-polarized light and s-polarized light reflected by the polarizer, and
the second infrared sensor includes:
a second transmission infrared sensor that detects an amount of infrared radiation at the second wavelength of the one of p-polarized light and s-polarized light transmitted through the polarizer, and
a second reflection infrared sensor that detects an amount of infrared radiation at the second wavelength of the other of p-polarized light and s-polarized light reflected by the polarizer.

6. The radiation temperature measurement device according to any one of claims 1 to 5, wherein the infrared detection unit detects an amount of infrared radiation at a position inclined with respect to a surface of the measurement object.

7. The radiation temperature measurement device according to claim 6, wherein the infrared detection unit detects an amount of infrared radiation at a position inclined such that an angle formed with the surface of the measurement object is a Brewster angle.

8. The radiation temperature measurement device according to any one of claims 1 to 7, wherein the temperature calculation unit calculates the temperature of the measurement object from at least three types of infrared radiation amounts detected by the infrared detection unit, by using an optimization calculation method.

9. The radiation temperature measurement device according to claim 8, wherein the temperature calculation unit calculates, in addition to the temperature of the measurement object, a background temperature of the measurement object and/or an ambient temperature of the measurement object.

10. The radiation temperature measurement device according to claim 8 or 9, wherein the temperature calculation unit calculates the temperature of the measurement object from at least three types of infrared radiation amounts detected by the infrared detection unit, by using a Kalman filter.

11. A radiation temperature measurement method for detecting infrared radiation emitted from a measurement object and measuring a temperature of the measurement object, the radiation temperature measurement method comprising:
detecting an amount of infrared radiation of each of a plurality of wavelength components and detecting an amount of infrared radiation for each of a plurality of polarization components in at least one of the plurality of wavelength components; and
calculating the temperature of the measurement object based on the detected at least three types of infrared radiation amounts.

12. A program for radiation temperature measurement used in a radiation temperature measurement device comprising an infrared detection unit that detects an amount of infrared radiation of each of a plurality of wavelength components in infrared radiation emitted from a measurement object and detects an amount of infrared radiation for each of a plurality of polarization components in at least one of the plurality of wavelength components,
the program causing a computer to have a function as a temperature calculation unit that calculates the temperature of the measurement object based on at least three types of infrared radiation amounts detected by the infrared detection unit.
